# FASCICULE DE BREVET EUROPEEN

(11) **EP 2 391 776 B1**
(45) Date de publication et mention de la délivrance du brevet: **02.03.2016**
(21) Numéro de dépôt: 10707620.0
(22) Date de dépôt: 29.01.2010
(51) Int. Cl.: E02D 33/00, E02D 1/08

(54) **PROCEDE ET SYSTEME DE SURVEILLANCE DE L'ETAT D'UNE FONDATION ENCASTREE DANS LE SOL**
SYSTEM UND VERFAHREN ZUR ÜBERWACHUNG DES ZUSTANDS EINES FUNDAMENTS IM BODEN
SYSTEM AND METHOD FOR MONITORING THE STATE OF A FOUNDATION IN A SOIL

(30) Priorité: 02.02.2009 FR 0950656
(43) Date de publication de la demande: 07.12.2011
(73) Titulaire: SOLETANCHE FREYSSINET, 92500 Rueil Malmaison (FR); Institut Français des Sciences et Technologies des Transports, de l'Aménagement et des Réseaux, 77447 Marne la Vallée Cedex 2 (FR)
(72) Inventeur: HOVHANESSIAN, Gilles, F-92160 Antony (FR); BOURQUIN, Frédéric, F-94210 La Varenne Saint Hilaire (FR)
(74) Mandataire: Cabinet Plasseraud
(86) Numéro de dépôt international: PCT/FR2010/050147
(87) Numéro de publication internationale: WO 2010/086566

(56) Documents cités:
- EP-A- 1 443 208
- FR-A- 2 871 570
- FR-A- 2 901 291

## Description

La présente invention concerne la surveillance de l'état d'une fondation encastrée dans le sol.

Une telle surveillance peut en effet être souhaitable, notamment dans certaines situations susceptibles de conduire à un endommagement voire à la ruine de la fondation, et par conséquent d'un ouvrage porté par cette fondation.

De telles situations peuvent par exemple inclure des phénomènes naturels tels que crues, séismes ou glissements de terrain.

Pour illustrer le propos, on prend ci-après l'exemple non limitatif d'un pont sur piles partiellement immergées dans une rivière.

Dans certaines conditions, un affouillement peut apparaître au niveau des piles. Il s'agit d'un phénomène d'érosion, progressif ou brutal, du sol autour et au-dessous des piles, causé par l'écoulement de l'eau de la rivière, en particulier si cet écoulement est tourbillonnaire.

La structure du sol étant alors modifiée autour et au-dessous des piles, l'équilibre de ces dernières peut être altéré verticalement et/ou en rotation.

Un affouillement important peut conduire à une fragilisation voire à une rupture des piles, capable d'entraîner la chute brutale du tablier du pont.

Ce phénomène représente certainement une des principales causes d'effondrement des ponts.

II peut être aggravé en cas de crue de la rivière car, dans ce cas, l'érosion du sol s'accélère brutalement et se double d'une augmentation de la poussée de l'eau sur les piles et éventuellement de chocs dus à des objets flottants entraînés par la rivière en crue.

Le mode de rupture d'une pile, susceptible de se produire dans de telles circonstances, suit globalement la séquence suivante :
- le sol s'affouille dégageant progressivement la base de la pile ;
- les efforts, qui devraient être transmis en tête de pile et se dissiper dans le sol, s'appliquent plus bas dans la fondation, i.e. dans une zone qui est en général peu armée et qui n'est pas dimensionnée pour reprendre ces efforts ;
- ce phénomène s'amplifie jusqu'à la rupture de la fondation, suivie rapidement par la rupture de la pile dans son ensemble.

Une telle rupture est dite fragile et elle n'est pas forcément précédée par une inclinaison progressive de la pile.

Plusieurs techniques de détection des affouillements sont connues par exemple par le document EP 1 443 208 A1.

Un premier groupe de techniques consiste à réaliser, de manière ponctuelle ou périodique, un relevé de la surface du sol au fond de l'eau.

Ce relevé peut être manuel, par exemple en utilisant une perche depuis la surface, en faisant effectuer des croquis ou des prises de vues par des plongeurs, ou bien en utilisant des sonars.

En variante, le relevé peut être automatisé ou semi-automatisé. A titre d'exemple, un sous-marin télécommandé équipé d'un appareil de prise de vues peut être utilisé.

Schématiquement, ces techniques s'intéressent au niveau du sol au fond de la rivière. Une baisse du niveau du sol atteste de l'existence d'un affouillement.

Un deuxième groupe de techniques consiste à disposer une instrumentation à demeure pour permettre des relevés du même type que dans le cas précédent, mais de façon plus régulière.

L'instrumentation comprend par exemple un collier métallique coulissant sur une tige immergée et insérée verticalement dans le sol, ainsi qu'un dispositif de mesure magnéto inductif permettant de mesurer la position du collier sur la tige.

Dans une autre configuration, le dispositif peut être constitué d'une masse suspendue par un câble à une roue dentée. Un dispositif de mesure permet de mesurer la position de la roue dentée, et donc la descente progressive de la masse.

Dans tous les cas, la mesure repose sur la descente d'un objet par gravité au fur et à mesure que le sol s'érode, et sur la mesure de la position de l'objet. Une descente de l'objet révèle, là encore, une baisse du niveau du sol, qui peut traduire l'existence d'un affouillement.

Les techniques de ces deux groupes présentent un certain nombre d'inconvénients.

En se basant sur une mesure du niveau du sol, elles ne permettent que de détecter la présence d'un affouillement formé à l'emplacement du capteur. Il est donc possible qu'une fondation à risque ne soit pas détectée car le sol est affouillé en un point différent de celui où est positionné le capteur, ou parce qu'il n'y a pas d'affouillement franc. La rupture de la fondation consécutive à l'affouillement pouvant être brutale, comme cela a été rappelé plus haut, une telle détection peut n'être pas assez précoce.

Ces techniques ne sont pas non plus efficaces pour une utilisation dans des conditions adverses, comme des crues par exemple. Cela est évident pour la réalisation de relevés manuels. Mais, même dans le cas de mesures automatisées, l'instrumentation placée à la surface de l'eau ou dans l'eau, ne résistera généralement pas.

A titre d'exemple, la tige et le collier magnétique susmentionnés pourront être emportés par le courant et le sonar pourra être endommagé voire détruit après avoir été heurté par des objets charriés par l'eau en cas de crue.

En outre, si l'affouillement se caractérise généralement par une diminution du niveau du sol, d'autres phénomènes capables de déséquilibrer la fondation jusqu'à entraîner sa chute peuvent exister.

Or les techniques susmentionnées sont spécifiques à la détection d'affouillement dues aux écoulements d'eau et ne permettent pas le suivi d'autres risques pouvant affaiblir la fondation.

Ainsi, une décompression du sol, par exemple liée à des mouvements de terrain pendant un tremblement de terre, peut entraîner une perte de tenue de la fondation (le sol décompacté ne joue plus son rôle de butée de la fondation), sans pour autant jouer significativement sur la hauteur du sol. Un tel phénomène ne peut être détecté avec les techniques de l'art antérieur présentées ci-dessus.

De même, une accumulation de sédiments, progressive ou brutale en raison par exemple d'un glissement de terrain ne sera pas non plus détectée par les systèmes de surveillance automatisée reposant sur le principe de la masse pesante.

Par ailleurs, le bon fonctionnement des techniques susmentionnées est difficilement contrôlable à distance. Il n'est pas possible par exemple de savoir si le système de mesure par une masse placée sur une tige ou suspendue à un fil est bloqué, par un objet charrié par la rivière par exemple, ou parce que les composants en sont corrodés. Si la masse est bloquée, l'affouillement ne sera pas détecté, et rien ne permettra de le savoir sans réaliser une vérification sur place.

Ces techniques ne permettent pas non plus de vérifier l'efficacité d'une réparation. Si un affouillement est détecté, il sera comblé, en général par la mise en place d'enrochement. Les techniques de l'art antérieur ne permettent pas de juger de la capacité de cette réparation à assurer à la fondation la butée horizontale nécessaire.

Un article de Y. Fujino et D.M. Siringoringo intitulé "Structural health monitoring for risk assessment of bridges: concept and implementations" et publié en novembre 2008 évoque très brièvement la possibilité de doter les piles d'un pont d'inclinomètres, pour détecter leur effondrement consécutif à un affouillement.

Cependant, l'inclinaison d'une pile de pont peut être normale, en particulier lorsqu'elle apparaît en réponse à une forte poussée horizontale exercée par l'eau de la rivière. Elle ne constitue donc pas, à elle seule, un indicateur pertinent.

De plus, étant donné que la rupture de la pile peut être brutale comme évoqué plus haut, c'est bien l'effondrement de la pile qui est constaté par cette technique. Cette dernière ne permet pas d'anticiper l'effondrement en pratique.

Un but de la présente invention est de limiter certains au moins des inconvénients des techniques susmentionnées.

L'invention propose ainsi un procédé de surveillance de l'état d'une fondation portant un ouvrage et encastrée dans le sol. Ce procédé comprend les étapes suivantes :
- acquérir, à l'aide d'un ensemble de capteurs placés sur l'ouvrage, un ensemble de mesures relatives à la fondation et/ou à l'ouvrage, selon un mode d'acquisition déterminé ;
- calculer, à partir dudit ensemble de mesures, un ensemble d'indicateurs d'état caractéristique d'une raideur d'encastrement de la fondation ; et
- effectuer une comparaison entre un ensemble de valeurs déduites de l'ensemble d'indicateurs d'état calculés et un ensemble de seuils.

Ainsi, la surveillance de l'état de la fondation est basée sur une analyse de sa raideur d'encastrement, qui est représentative de sa tenue dans le sol. On s'intéresse donc directement à la fondation et à l'ouvrage porté, plutôt qu'à une éventuelle manifestation extérieure d'un phénomène susceptible de déstabiliser la fondation, comme l'érosion du sol par exemple.

La raideur d'encastrement peut avantageusement inclure la raideur horizontale ou en rotation de la fondation, qui est représentative de la résistance du sol en butée, c'est-à-dire de la capacité du sol à supporter les efforts horizontaux qui lui sont transmis par la fondation.

De cette façon, la surveillance peut être plus précise. Elle permet de détecter plus tôt les modifications de la condition d'encastrement de la fondation, et donc de mieux anticiper les phénomènes qui peuvent conduire à son endommagement, voire à sa ruine.

Cette surveillance permet aussi de détecter une plus grande variété de phénomènes, car toute perte de la tenue de la fondation dans le sol est détectée, quelle que soit sa cause et ses conséquences (affouillement ayant pour effet de faire baisser le niveau du sol, décompression du sol éventuellement sans modification de son niveau, affouillement local sur une partie seulement de la fondation, etc.).

De plus, les capteurs utilisés étant placés sur l'ouvrage (avantageusement à grande distance de la fondation), ils sont moins exposés à des risques d'endommagement ou de destruction que certains dispositifs des techniques antérieures susmentionnées. En particulier, lorsque la fondation est au moins partiellement immergée, les capteurs sont avantageusement à distance de l'eau, ce qui les protège notamment lorsque l'écoulement de l'eau devient violent.

De plus, les capteurs peuvent être utilisés après un renforcement du sol pour en caractériser l'efficacité.

De plus, la solution utilisée peut faire l'objet d'un diagnostic à distance et ne risque pas d'être inopérante par exemple au moment d'une crue.

De plus encore, cette solution peut être utilisée pour détecter et diagnostiquer une diminution ou une augmentation de la raideur d'encastrement de la fondation, liée à d'autres phénomènes que des affouillements (tremblements de terre, accumulation de dépôts, etc.)

On notera par ailleurs que, dans la présente description ainsi que dans les revendications, chaque fois qu'il est fait référence à un ensemble d'éléments, quels que soient les éléments en question, un tel ensemble doit être interprété comme pouvant inclure un seul élément ou une pluralité d'éléments.

Avantageusement, un ou plusieurs paramètres du mode d'acquisition des mesures peuvent varier selon la valeur d'au moins un indicateur d'état dudit ensemble d'indicateurs d'état et/ou d'un autre indicateur tel qu'un niveau d'eau autour de la fondation. La surveillance de l'état de la fondation peut ainsi être adaptée selon les circonstances, améliorant de ce fait l'expertise ou la prise de décision qui peuvent éventuellement lui faire suite.

L'invention propose également un système de surveillance de l'état d'une fondation portant un ouvrage et encastrée dans le sol. Ce système est agencé pour mettre en oeuvre le procédé susmentionné et il comprend :
- un ensemble de capteurs aptes à être placés sur l'ouvrage, ledit ensemble de capteurs étant agencé pour acquérir un ensemble de mesures relatives à la fondation et/ou à l'ouvrage, selon un mode d'acquisition déterminé ;
- un calculateur pour calculer, à partir dudit ensemble de mesures, un ensemble d'indicateurs d'état caractéristique d'une raideur d'encastrement de la fondation ; et
- un comparateur pour effectuer une comparaison entre un ensemble de valeurs déduites de l'ensemble d'indicateurs d'état calculés et un ensemble de seuils.

D'autres particularités et avantages de la présente invention apparaîtront dans la description ci-après d'exemples de réalisation non limitatifs, en référence aux dessins annexés, dans lesquels :
- la figure 1 est un schéma représentant un exemple de système de surveillance de l'état d'une fondation d'un pont sur piles ;
- la figure 2 est un schéma représentant un premier exemple de fondation pour une pile de pont ;
- la figure 3 est un schéma représentant un exemple de modélisation de la raideur d'encastrement de la fondation montrée à la figure 2 ;
- la figure 4 est un schéma représentant un deuxième exemple de fondation pour une pile de pont ;
- la figure 5 est un schéma représentant un exemple de modélisation de la raideur d'encastrement de la fondation montrée à la figure 4 ;
- la figure 6 est un schéma montrant différents paramètres d'un mode d'acquisition de mesures relatives à une fondation et/ou un ouvrage porté ;
- la figure 7 est un schéma représentant les étapes d'un exemple de surveillance de l'état d'une fondation ;
- la figure 8 est un schéma représentant une séquence d'étapes avantageuses précédant une surveillance opérationnelle ;
- la figure 9 est un schéma représentant un exemple de mesure acquise par un capteur.

L'invention va être décrite ci-après, de façon non limitative, dans le cadre d'une surveillance de l'état de la fondation d'un pont sur piles. Elle s'applique néanmoins à tout autre type de fondation portant un ouvrage et encastrée dans le sol. Cette fondation peut éventuellement se situer dans une zone soumise à des risques naturels tels que crues, séismes ou glissements de terrain.

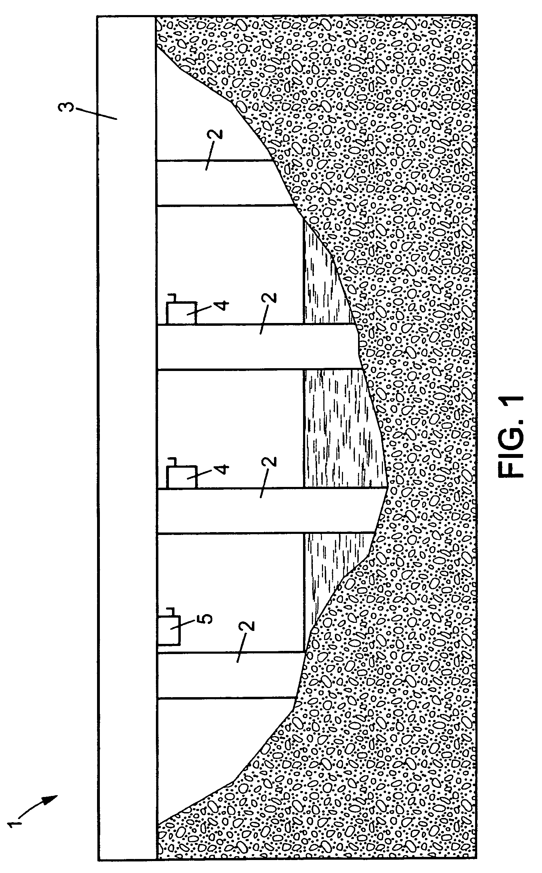

La figure 1 montre un exemple de pont 1 comprenant un tablier 3 et un certain nombre de piles 2 portant le tablier 3. Les fondations de chacune des piles 2 sont encastrées dans le sol. Dans l'exemple illustré, le pont surmonte une rivière, et deux des piles 2 ont une portion inférieure immergée dans cette rivière. Bien sûr, l'invention s'appliquerait également à d'autres configurations de ponts.

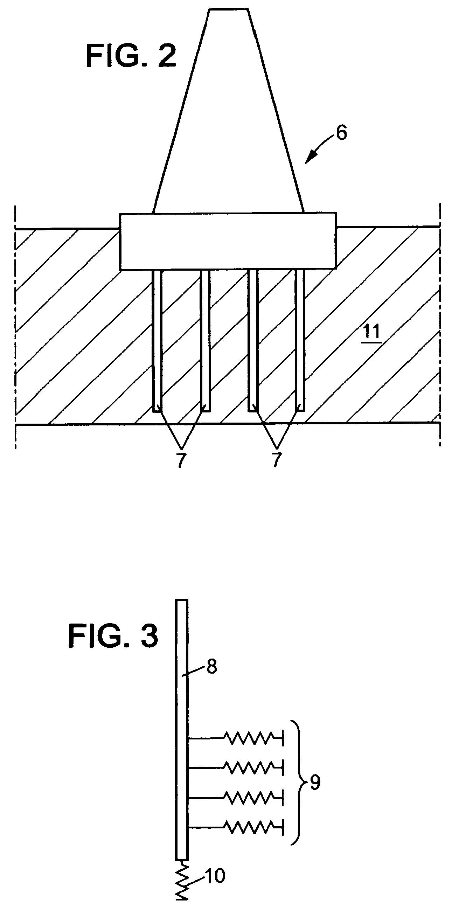

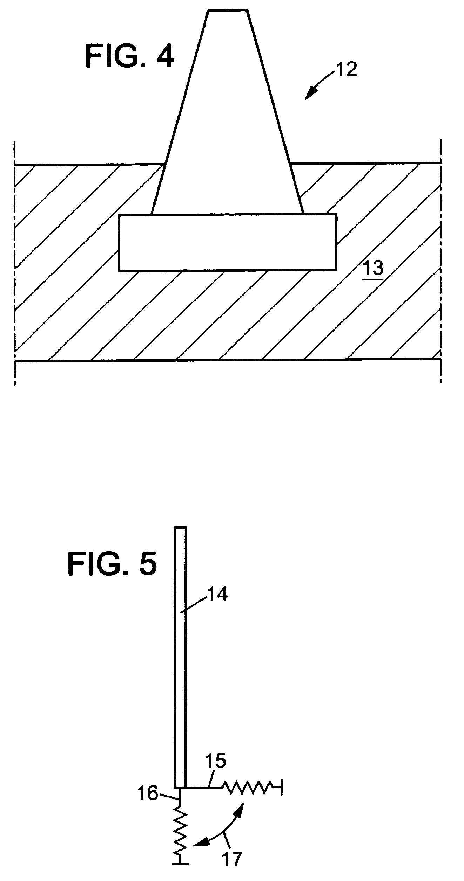

Un pont sur piles utilise généralement un des deux types de fondations suivantes au niveau de chacune de ses piles :
- une fondation profonde, où des pieux 7 supportant la pile 6 sont enfoncés dans le sol 11, comme illustré à la figure 2, ou
- une fondation superficielle, où seule une portion inférieure de la pile 12 est encastrée dans le sol 13, comme illustré à la figure 5.

On comprendra donc que chaque pile 6 ou 12 peut participer dans une certaine mesure à la fondation (dans sa partie inférieure), tout en faisant partie de l'ouvrage porté, c'est-à-dire du pont (dans sa partie supérieure).

Bien d'autres types de fondations pourraient naturellement être envisagés.

Dans tous les cas, on peut montrer qu'une fondation portant un ouvrage peut faire l'objet d'une modélisation. Cette dernière peut par exemple consister, dans le cas d'une fondation d'une pile de pont, en une poutre d'inertie variable maintenue par des ressorts et/ou amortisseurs travaillant en translation et/ou en rotation et simulant le comportement du sol.

Un modèle de la configuration montrée sur la figure 2 est illustré sur la figure 3. On y voit une poutre d'inertie variable 8, une série de ressorts / amortisseurs 9 travaillant en translation horizontale, ainsi qu'un ressort / amortisseur 10 travaillant en translation verticale.

De même, un modèle possible pour la configuration montrée sur la figure 4 est illustré sur la figure 5. Ce modèle comprend une poutre d'inertie variable 14, un ressort / amortisseur 15 travaillant en translation horizontale, un ressort / amortisseur 16 travaillant en translation verticale et un ressort / amortisseur 17 travaillant en rotation.

Dans les deux exemples de modèles mentionnés ci-dessus, on peut en outre prendre en compte une condition d'appui en tête de poutre, représentative du type d'appui du tablier de pont sur la pile considérée (e.g. appui glissant, appui fixe, appui à pot, etc.).

D'autres modèles sont bien sûr également envisageables.

De tels modèles théoriques permettent de simuler le comportement de la fondation encastrée dans le sol.

A partir d'un modèle donné, on peut définir un ensemble d'indicateurs d'état caractéristique d'une raideur d'encastrement de la fondation.

La raideur d'encastrement de la fondation s'entend ici comme le rapport entre un effort appliqué sur la fondation et un déplacement de la fondation causé par cet effort. Cette notion recouvre celles de raideur verticale, horizontale ou en rotation, qui correspondent respectivement à un effort vertical, horizontal ou à un couple sur un déplacement vertical, horizontal ou une rotation angulaire.

La raideur d'encastrement peut comprendre une raideur statique, qui correspond à un effort statique, c'est-à-dire correspondant à une sollicitation lente ou sensiblement invariante. Elle peut aussi comprendre la notion de raideur dynamique qui correspond à un effort dynamique, pouvant s'exprimer comme une somme de sollicitations périodiques de fréquences plus ou moins élevées. La raideur dynamique peut, dans certains cas, varier en fonction de la fréquence de la sollicitation.

En plus de l'ensemble d'indicateurs d'état, on peut définir, pour le modèle sélectionné, un ensemble de seuils auquel un ensemble de valeurs déduites de l'ensemble d'indicateurs d'état peut être comparé.

Ces seuils sont avantageusement choisis pour correspondre à des états remarquables de la fondation, comme cela apparaîtra plus loin. Il peut s'agir de seuils absolus définissant des valeurs limites absolues pour lesdites valeurs déduites de l'ensemble d'indicateurs d'état, ou bien des seuils relatifs définissant une amplitude limite de variation pour lesdites valeurs déduites de l'ensemble d'indicateurs d'état. Un mélange de seuils absolus et de seuils relatifs est également possible.

L'ensemble d'indicateurs d'état peut comprendre une grande variété d'indicateurs d'état.

A titre d'exemple, un ou plusieurs de ces indicateurs d'état caractéristiques d'une raideur statique d'encastrement de la fondation pourraient être utilisés. Dans le cas, d'une pile de pont partiellement immergée, on peut ainsi utiliser, comme indicateur d'état, un rapport entre l'effort appliqué par l'eau sur la pile et une inclinaison de la pile par rapport à son axe principal, éventuellement dans un plan donné. On notera qu'un tel indicateur est beaucoup plus pertinent qu'une simple inclinaison, dont une valeur élevée peut être tout à fait normale si elle coïncide avec une forte poussée horizontale de l'eau, mais anormale en cas de poussée faible.

En variante ou en complément, un ou plusieurs des indicateurs d'état caractéristiques d'une raideur dynamique d'encastrement de la fondation pourraient être utilisés. On peut par exemple citer un indicateur caractéristique d'un comportement vibratoire de l'ensemble fondation + ouvrage, tel qu'un indicateur relatif à des fréquences propres de vibration de l'ensemble fondation et ouvrage. Dans le cas d'un pont sur piles surmontant une rivière, une dérive des fréquences propres de vibration de l'ensemble fondation + pont porté par la fondation, et en particulier du premier mode de basculement autour d'un axe horizontal perpendiculaire au cours de la rivière, donne en effet une bonne indication du risque de ruine de la fondation et/ou de l'ouvrage.

On s'intéresse maintenant à la surveillance de l'état d'une fondation réelle portant un ouvrage et encastrée dans le sol.

A cet effet, un ensemble de capteurs sont placés sur l'ouvrage. La figure 1 illustre cette situation dans le cas où l'ouvrage en question est un pont 1 sur piles 2.

Dans cet exemple, deux des capteurs 4 utilisés sont placés sur des piles correspondantes 2. Ils sont néanmoins situés suffisamment haut sur les piles pour ne pas être trop exposés à des risques d'endommagement ou de destruction, par exemple suite à une crue de la rivière passant sous le pont 1. Le troisième capteur 5 est, quant à lui, placé sous le tablier 3 et à proximité d'une pile 2 du pont 3. Bien sûr, un nombre et/ou un positionnement différent des capteurs peut être envisagé.

Ces capteurs sont agencés pour acquérir certaines mesures relatives à la fondation et/ou à l'ouvrage à partir desquelles l'ensemble d'indicateurs d'état caractéristique d'une raideur d'encastrement de la fondation, tel mentionné plus haut, peut être obtenu.

Chaque capteur peut être spécialisé dans un type de mesures donné, mais il est également possible que certains au moins des capteurs utilisés soient polyvalents et puissent acquérir tout ou partie de l'ensemble desdites mesures. Des dispositifs incluant chacun un groupe de capteurs spécialisés peuvent éventuellement être utilisés.

Certains au moins des capteurs peuvent avoir des capacités de traitement et de mémorisation de données. Par ailleurs, certains au moins des capteurs peuvent fonctionner sur batterie et comprendre des moyens de communication sans fil pour communiquer avec une unité distante et/ou entre eux.

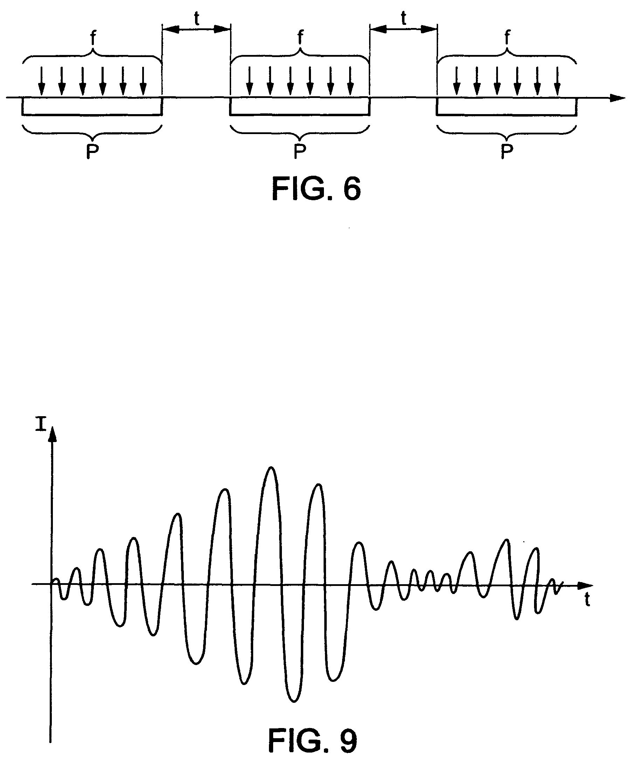

Les mesures susceptibles d'être acquises par les capteurs sont adaptées au type d'indicateurs d'état qu'on souhaite calculer. A titre d'exemple, une mesure d'inclinaison I d'une pile par rapport à son axe principal, éventuellement dans un plan donné, peut être acquise au cours du temps t, comme montré à la figure 9. Une telle mesure peut être acquise à l'aide d'un inclinomètre.

Une valeur de l'indicateur d'état décrit plus haut comme le rapport entre l'effort appliqué par l'eau sur la pile et une inclinaison de la pile peut ainsi être calculée à partir d'une telle mesure, ainsi que d'une mesure de l'effort appliqué par l'eau sur la pile.

De même, la mesure montrée à la figure 9 peut être utilisée pour calculer des fréquences propres de vibration de l'ensemble fondation + pont porté par la fondation, également défini plus haut comme un indicateur d'état possible.

En variante ou en complément, le comportement vibratoire de l'ensemble fondation + pont pourrait être mesuré à l'aide d'un ou plusieurs accéléromètres.

Bien d'autres mesures peuvent être envisagées comme cela apparaîtra à l'homme du métier.

Ces mesures sont acquises selon un mode d'acquisition déterminé, dont des exemples non limitatifs de paramètres sont illustrés à la figure 6.

Les paramètres d'acquisition composant le mode d'acquisition comprennent notamment la définition d'une ou plusieurs périodes de temps P déterminées, au cours desquelles les mesures sont acquises. Au sein de chacune de ces périodes P, une fréquence d'acquisition f peut en outre être définie : elle correspond au nombre de mesures acquises pendant P. En outre, lorsque plusieurs périodes de temps P sont utilisées pour l'acquisition, l'intervalle de temps t entre deux périodes successives peut constituer un autre paramètre d'acquisition.

D'autres paramètres d'acquisition peuvent être utilisés en remplacement ou en complément des paramètres P, f et t mentionnés ci-dessus.

Tout ou partie de ces paramètres d'acquisition peuvent être fixes ou bien varier dans le temps. Des exemples d'événements pouvant déclencher une modification d'un ou plusieurs de ces paramètres seront évoqués plus loin.

Un ensemble d'indicateurs d'état caractéristique d'une raideur d'encastrement de la fondation peut ensuite être calculé à partir de l'ensemble des mesures acquises à l'aide des capteurs. Un tel ensemble d'indicateurs d'état a déjà été défini plus haut.

Lorsque les capteurs sont dotés de capacités de traitement et de mémorisation de données, ils peuvent avantageusement calculer et mémoriser eux-mêmes les indicateurs d'état, de préférence en temps réel. En ne stockant que ces indicateurs d'état, plutôt que les mesures acquises, on limite le volume de données à mémoriser.

Dans le cas contraire, les capteurs peuvent avantageusement transmettre certaines au moins des mesures acquises et/ou des indicateurs d'état calculés à une unité distante de traitement et/ou de mémorisation de données, par exemple via une liaison sans fil. Lorsque cette unité distante est hors de portée d'un capteur donné, les signaux transmis par ce dernier peuvent avantageusement être relayés par un ou plusieurs autres capteurs jusqu'à atteindre ladite unité distante.

Des valeurs peuvent alors être déduites des indicateurs d'état calculés en vue d'être comparées à un ensemble de seuils. Ces seuils peuvent être choisis en fonction d'un comportement attendu de la fondation et de l'ouvrage porté, par exemple à partir d'un modèle théorique tel que mentionné plus haut.

On notera que ces valeurs pourront directement être celles des indicateurs d'état calculés, lorsque ces derniers peuvent être comparés aux seuils. Dans le cas contraire, elles peuvent résulter de l'application de fonctions mathématiques à un ou plusieurs des indicateurs d'état calculés (changement d'échelle ou d'unité d'un indicateur d'état, combinaison d'indicateurs d'état, etc.).

A titre d'exemple, une comparaison peut être effectuée entre l'indicateur d'état correspondant au rapport entre l'effort appliqué par l'eau sur une pile et une inclinaison de cette pile, et un seuil correspondant.

Avantageusement, la comparaison entre l'ensemble des valeurs déduites des indicateurs d'état calculés et l'ensemble des seuils peut tenir compte d'un ou plusieurs facteurs d'influence susceptibles d'affecter au moins un des indicateurs d'état.

Ces facteurs d'influence comprennent par exemple un ou plusieurs parmi : la température (gradient thermique), le vent, le fluage d'un matériau incorporé dans la fondation ou l'ouvrage ou la fréquence d'un effort appliqué sur la fondation. La charge supportée par l'ouvrage, par exemple en raison d'un trafic porté par l'ouvrage, peut également constituer un facteur d'influence.

Des capteurs, qui peuvent être associés ou, au contraire, distincts des capteurs mentionnés plus haut, peuvent être utilisés pour mesurer ces facteurs d'influence. Ils peuvent comprendre un capteur de température, un anémomètre pour le vent, une jauge de déformation pour le fluage, un détecteur de charge, etc.

Ces facteurs d'influence peuvent être pris en compte dans la comparaison en adaptant les indicateurs d'état calculés et/ou les seuils de façon appropriée. A titre d'exemple, la valeur d'un indicateur d'état faisant intervenir l'inclinaison d'une pile de pont pourrait être modifiée pour compenser la contribution de l'effet du vent mesuré dans cette inclinaison. La comparaison entre cette valeur et un seuil prédéterminé ne serait ainsi pas faussée par l'effet du vent.

En fonction du résultat de la comparaison, une expertise peut être réalisée et/ou une décision peut être prise sur une exploitation de l'ouvrage.

La réalisation d'une expertise peut consister à élaborer un diagnostic de l'état de la fondation.

La prise d'une décision sur l'exploitation de l'ouvrage peut par exemple comprendre la fermeture ou la restriction de l'exploitation de cet ouvrage. Ainsi, lorsque l'ouvrage considéré est un pont, la prise de décision peut par exemple consister en une réduction ou un arrêt du trafic sur ce pont.

Grâce à l'utilisation de l'ensemble d'indicateurs d'état caractéristique d'une raideur d'encastrement de la fondation, on a ainsi un moyen fiable de détecter au plus tôt une perte de tenue de la fondation dans le sol. De ce fait, un affouillement peut être anticipé, bien avant la ruine de la fondation.

De plus, puisqu'on s'intéresse directement à la fondation et à l'ouvrage eux-mêmes, plutôt qu'aux éventuelles conséquences susceptibles de les impacter (baisse de niveau du sol par exemple dans le cas d'un affouillement), la détection est également plus fiable et plus précise.

On peut aussi détecter et anticiper des phénomènes, autres que les affouillements, qui peuvent néanmoins conduire à l'endommagement voire à la ruine de la fondation et de l'ouvrage, tels que des décompressions du sol (e.g. sol à sédiments décompactés), des séismes, des glissements de terrain, d'autres risques naturels, etc.

Dans l'hypothèse où une modélisation théorique a été effectuée initialement et que certains au moins des seuils destinés à être utilisés dans la surveillance de l'état de la fondation sont issus de cette modélisation, une phase d'apprentissage peut avantageusement être mise en oeuvre avant la surveillance opérationnelle proprement dite.

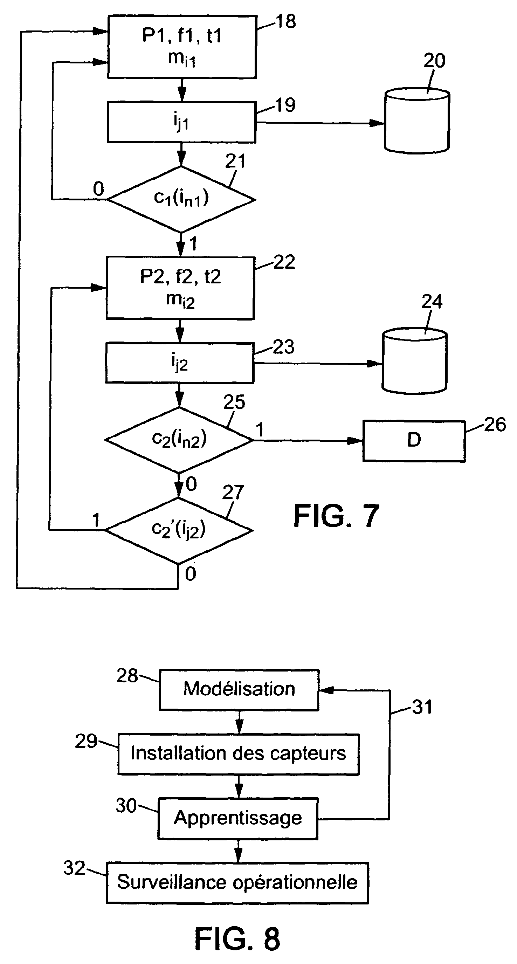

Cette situation est illustrée à la figure 8. La phase d'apprentissage (étape 30) peut être menée après modélisation de la raideur d'encastrement de la fondation (étape 28) et installation des capteurs sur l'ouvrage (étape 29). Elle consiste à ajuster les seuils définis à partir de la modélisation théorique par des mesures issues des capteurs. Elle est avantageusement réalisée sous sollicitations naturelles (vent, trafic,etc.).

On s'assure ainsi que les seuils utilisés en surveillance opérationnelle (étape 32) seront bien adaptés à la fondation considérée en pratique. La condition d'encastrement de la fondation dans le sol pourra ainsi être correctement suivie et analysée.

L'analyse de la raideur d'encastrement de la fondation se fera avantageusement en fonction des sollicitations naturelles et de la réponse de la fondation à ces sollicitations naturelles. Les deux principales sollicitations envisagées sont la poussée de l'eau dans les cas de fondations en rivières, et le trafic routier ou ferroviaire. Dans l'hypothèse où ces sollicitations naturelles sont insuffisantes, et par exemple ne solliciterait pas suffisamment les modes de basculement de la fondation, il pourrait néanmoins être envisagé de solliciter artificiellement la fondation, par exemple à l'aide de vibreurs, en faisant freiner des camions, en les faisant passer sur des dos d'ânes, ou autre.

Un exemple de surveillance de l'état d'une fondation d'un pont sur piles, encastrée dans le sol, va être décrit ci-après en référence à la figure 7, à titre d'illustration.

Dans un premier temps, une surveillance courante est réalisée. Elle correspond à un mode normal, dans lequel les sollicitations exercées sur la fondation sont a priori d'ampleur usuelle.

Elle comprend l'acquisition de mesures mᵢ₁ par un ensemble de capteurs, selon un premier mode d'acquisition dont les paramètres peuvent comprendre, comme décrit en référence à la figure 6, une période de temps P1 sur laquelle les mesures sont acquises, une fréquence d'acquisition f1 pour chaque période P1 et/ou un intervalle de temps t1 entre deux périodes P1 successives (étape 18).

A titre d'exemple, l'acquisition des mesures en surveillance courante peut être faite sur des périodes de 5 minutes séparées par des intervalles de 2 heures, et avec une fréquence d'acquisition de 500 Hz. Bien sûr, ces valeurs sont données à titre illustratif et bien d'autres valeurs pourraient être utilisées.

La surveillance courante se poursuit, à l'étape 19, par le calcul d'un ensemble d'indicateurs d'état iⱼ₁ caractéristique d'une raideur d'encastrement de la fondation, à partir des mesures mᵢ₁ et selon les principes exposés plus haut.

Une partie au moins de ces indicateurs d'état iⱼ₁ peuvent être archivés dans une mémoire appropriée, qui peut être celle des capteurs ou d'une unité distincte, aux fins d'une éventuelle analyse ultérieure (étape 20).

A l'étape 21, on vérifie si une condition c₁ est satisfaite ou non par un ou plusieurs indicateurs iₙ₁ de l'ensemble des indicateurs d'état iⱼ₁ calculés. Cette condition peut prendre diverses formes. Elle comprend la comparaison d'au moins une valeur déduite de iₙ₁ avec un ou plusieurs seuils adéquats.

A titre d'exemple, l'indicateur d'état iₙ₁ pourrait consister en un rapport entre l'effort appliqué par l'eau d'une rivière sur une pile du pont et une inclinaison de cette pile, et être comparé à un seuil prédéterminé.

En variante, la condition c₁ pourrait s'appliquer à un indicateur ne faisant pas partie de l'ensemble d'indicateurs d'état iⱼ₁ calculés, et ne renseignant pas directement sur la raideur d'encastrement de la fondation.

Par exemple, un tel indicateur pourrait se rapporter à un niveau d'eau autour de la fondation. Cet indicateur pourrait d'ailleurs être calculé à partir d'un des capteurs mentionnés plus haut, ou bien d'un capteur indépendant, tel qu'un capteur à ultrasons ou un radar par exemple.

Dans ce cas, la condition vérifiée à l'étape 21 pourrait comprendre une comparaison entre ce niveau d'eau et un seuil par exemple caractéristique d'une crue. Ce seuil peut s'exprimer en une hauteur absolue d'eau, en un rapport entre la hauteur d'eau et une hauteur de l'ouvrage, en une variation de la hauteur d'eau, ou autre.

De cette façon, lorsque la condition de l'étape 21 n'est pas remplie (ce qui est symbolisé par la valeur "0" en sortie du test c₁(iₙ₁)), cela peut signifier que le niveau de la rivière passant sous le pont n'est pas excessif et qu'on peut rester en mode normal avec la même surveillance courante qu'auparavant.

Dans le cas contraire, c'est-à-dire si la condition de l'étape 21 est remplie (ce qui est symbolisé par la valeur "1" en sortie du test c₁(iₙ₁)), cela peut signifier que la rivière est en crue et donc que les risques d'affouillements et autres phénomènes pouvant entraîner une déstabilisation de la fondation augmentent.

On peut alors passer dans un autre mode, qui est un "mode crue" dans cet exemple. Dans ce nouveau mode, une surveillance accrue est mise en oeuvre.

Des mesures mᵢ₂ sont acquises à l'aide des capteurs selon un deuxième mode d'acquisition, qui comprend des paramètres d'acquisition P2, f2 et t2, dont certains au moins ont des valeurs différentes de P1, f1 et t1 (étape 22).

Par exemple, une acquisition continue peut être effectuée en "mode crue". Autrement dit, une seule période P2 de durée indéfinie est utilisée. La fréquence d'acquisition f2 peut, quant à elle, être la même que f1, e.g. à 500 Hz, ou bien plus rapide, pour disposer de plus de mesures.

On comprend ainsi qu'au moins un paramètre d'acquisition peut varier selon la valeur d'au moins un indicateur d'état (iₙ₁ dans ce cas) ou d'un autre indicateur (e.g. un niveau d'eau autour de la fondation).

A l'étape 23, un ensemble d'indicateurs d'état iⱼ₂ caractéristique d'une raideur d'encastrement de la fondation est calculé à partir des mesures mᵢ₂ et selon les principes exposés plus haut. Ce calcul est avantageusement réalisé au fur et à mesure de l'acquisition, c'est-à-dire en temps réel, éventuellement sur une fenêtre de temps glissante.

Une partie au moins de ces indicateurs d'état iⱼ₂ peuvent être archivés dans une mémoire appropriée, qui peut être celle des capteurs ou d'une unité distincte, aux fins d'une éventuelle analyse ultérieure (étape 24).

A l'étape 25, on vérifie si condition c₂ est satisfaite ou non par un ou plusieurs indicateurs iₙ₂ de l'ensemble des indicateurs d'état iⱼ₂ calculés. Cette condition peut prendre diverses formes. Elle comprend la comparaison d'au moins une valeur déduite de iₙ₂ avec un ou plusieurs seuils adéquats.

Avantageusement, les seuils utilisés dans cette comparaison sont choisis pour anticiper un risque de ruine de la fondation.

Plusieurs seuils peuvent d'ailleurs être utilisés vis-à-vis des mêmes indicateurs d'état, de façon à permettre une expertise ou une prise de décision D bien adaptée selon la situation (étape 26).

A titre d'exemple, le dépassement d'un premier seuil seulement par un indicateur d'état donné pourrait conduire à restreindre la circulation sur le pont, tandis que le dépassement d'un deuxième seuil supérieur au premier pourrait conduire à interdire totalement la circulation sur le pont.

Différents niveaux d'alarmes et d'alertes peuvent ainsi être définis, avec des actions adaptées correspondantes.

Lorsque la condition c2 n'est pas (ou plus) remplie, une condition supplémentaire c₂' peut être vérifiée sur tous les indicateurs d'état iⱼ₂, ou bien certains d'entre eux seulement (étape 27), pour vérifier si le fonctionnement en "mode crue" est toujours justifié ("1"), ou bien si un retour au mode normal est possible ("0").

En cas de retour au mode normal, la surveillance courante mentionnée plus haut est alors reprise.

On comprendra que bien d'autres exemples de surveillance peuvent être définis selon les principes de l'invention exposés plus haut. En particulier, d'autres adaptations de la stratégie d'acquisition pourraient être utilisées en fonction des données recueillies à l'aide des capteurs.

## Revendications

1. Procédé de surveillance de l'état d'une fondation portant un ouvrage (1) et encastrée dans le sol, comprenant les étapes suivantes :
- acquérir, à l'aide d'un ensemble de capteurs (4,5) placés sur l'ouvrage, un ensemble de mesures (mᵢ₁,mᵢ₂) relatives à la fondation et/ou à l'ouvrage, selon un mode d'acquisition déterminé ;
- calculer, à partir dudit ensemble de mesures, un ensemble d'indicateurs d'état (iⱼ₁,iⱼ₂) caractéristique d'une raideur d'encastrement de la fondation ; et
- effectuer une comparaison entre un ensemble de valeurs déduites de l'ensemble d'indicateurs d'état calculés et un ensemble de seuils.

2. Procédé selon la revendication 1, dans lequel l'ensemble d'indicateurs d'état (iⱼ₁,iⱼ₂) comprend au moins un indicateur caractéristique d'une raideur dynamique d'encastrement de la fondation, c'est-à-dire relatif à un rapport entre un effort dynamique appliqué sur la fondation et un déplacement de la fondation causé par ledit effort dynamique.

3. Procédé selon la revendication 2, dans lequel ledit indicateur caractéristique d'une raideur dynamique d'encastrement de la fondation est caractéristique d'un comportement vibratoire de l'ensemble fondation et ouvrage, tel qu'un indicateur relatif à des fréquences propres de vibration de l'ensemble fondation et ouvrage.

4. Procédé selon l'une quelconque des revendications précédentes, dans lequel l'ensemble d'indicateurs d'état (iⱼ₁,iⱼ₂) comprend au moins un indicateur caractéristique d'une raideur statique d'encastrement de la fondation, c'est-à-dire relatif à un rapport entre un effort statique appliqué sur la fondation et un déplacement de la fondation causé par ledit effort statique.

5. Procédé selon l'une quelconque des revendications précédentes, dans lequel la comparaison entre un ensemble de valeurs déduites de l'ensemble d'indicateurs d'état (iⱼ₁,iⱼ₂₎ calculés et un ensemble de seuils tient compte d'au moins un facteur d'influence susceptible d'affecter au moins un indicateur d'état de l'ensemble d'indicateurs d'état, tel que la température, le vent, le fluage d'un matériau incorporé dans la fondation ou l'ouvrage ou la fréquence d'un effort appliqué sur la fondation.

6. Procédé selon l'une quelconque des revendications précédentes, dans lequel au moins un paramètre (P,f,t) dudit mode d'acquisition déterminé, tel qu'une période de temps sur laquelle l'ensemble de mesures est acquis, un intervalle de temps entre deux périodes de temps successives sur lesquelles l'ensemble de mesures est acquis, ou une fréquence d'acquisition à l'intérieur d'une période de temps sur laquelle l'ensemble de mesures est acquis, varie selon la valeur d'au moins un indicateur d'état dudit ensemble d'indicateurs d'état (iⱼ₁,iⱼ₂).

7. Procédé selon l'une quelconque des revendications précédentes, dans lequel une expertise est réalisée et/ou une décision sur une exploitation de l'ouvrage (1) est prise, en fonction d'un résultat de ladite comparaison.

8. Procédé selon la revendication 7, dans lequel ladite décision comprend une fermeture ou une restriction d'une exploitation de l'ouvrage (1).

9. Procédé selon l'une quelconque des revendications précédentes, dans lequel certains au moins des seuils dudit ensemble de seuils sont choisis à partir d'une modélisation théorique (28) de la raideur d'encastrement de la fondation, et éventuellement ajustés par des mesures effectuées lors d'une phase d'apprentissage (30).

10. Procédé selon l'une quelconque des revendications précédentes, dans lequel la fondation est située dans une zone soumise à des risques naturels tels que crues, séismes ou glissements de terrain.

11. Procédé selon l'une quelconque des revendications précédentes, dans lequel au moins un paramètre (P,f,t) dudit mode d'acquisition déterminé, tel qu'une période de temps sur laquelle l'ensemble de mesures est acquis, un intervalle de temps entre deux périodes de temps successives sur lesquelles l'ensemble de mesures est acquis, ou une fréquence d'acquisition à l'intérieur d'une période de temps sur laquelle l'ensemble de mesures est acquis, varie selon un niveau d'eau autour de la fondation.

12. Procédé selon l'une quelconque des revendications précédentes, dans lequel au moins certains capteurs (4,5) dudit ensemble de capteurs ont des capacités de traitement et de mémorisation de données.

13. Procédé selon l'une quelconque des revendications précédentes, dans lequel au moins certains capteurs (4,5) dudit ensemble de capteurs fonctionnent sur batterie et comprennent des moyens de communication sans fil.

14. Système de surveillance de l'état d'une fondation portant un ouvrage (1) et encastrée dans le sol, le système étant agencé pour mettre en oeuvre le procédé selon l'une quelconque des revendications précédentes et comprenant :
- un ensemble de capteurs (4,5) aptes à être placés sur l'ouvrage, ledit ensemble de capteurs étant agencé pour acquérir un ensemble de mesures (mᵢ₁,mᵢ₂) relatives à la fondation et/ou à l'ouvrage, selon un mode d'acquisition déterminé ;
- un calculateur pour calculer, à partir dudit ensemble de mesures, un ensemble d'indicateurs d'état (iⱼ₁,iⱼ₂) caractéristique d'une raideur d'encastrement de la fondation ; et
- un comparateur pour effectuer une comparaison entre un ensemble de valeurs déduites de l'ensemble d'indicateurs d'état calculés et un ensemble de seuils.

## Patentansprüche

1. Verfahren zur Überwachung des Zustands eines Fundaments, welches ein Bauwerk (1) trägt und im Boden eingebaut ist, umfassend die folgenden Schritte:
• Beschaffen einer Menge von Messungen (mᵢ₁, mᵢ₂), welche sich auf das Fundament oder/und auf das Bauwerk beziehen, mittels einer Menge von auf dem Bauwerk positionierten Sensoren (4, 5), gemäß einem bestimmten Beschaffungsmodus,
• Berechnen einer Menge von Zustandsindikatoren (iⱼ₁, iⱼ₂), welche charakteristisch für eine Einbau-Steifigkeit des Fundaments ist, ausgehend von der Menge von Messungen, und
• Ausführen eines Vergleichs zwischen einer Menge von Werten, welche von der Menge berechneter Zustandsindikatoren abgeleitet sind, und einer Menge von Schwellenwerten.

2. Verfahren nach Anspruch 1, wobei die Menge von Zustandsindikatoren (iⱼ₁, iⱼ₂) wenigstens einen Indikator umfasst, der charakteristisch für eine dynamische Einbau-Steifigkeit des Fundaments ist, also in Bezug auf einen Zusammenhang zwischen einer dynamischen Beanspruchung, die auf das Fundament ausgeübt wird, und einer durch diese dynamische Beanspruchung bewirkten Verlagerung des Fundaments.

3. Verfahren nach Anspruch 2, wobei der Indikator, der charakteristisch für eine dynamische Einbau-Steifigkeit des Fundaments ist, charakteristisch für ein Schwingungsverhalten der Gesamtheit aus Fundament und Bauwerk ist, beispielsweise ein Indikator, der sich auf Schwingungs-Eigenfrequenzen der Gesamtheit aus Fundament und Bauwerk bezieht.

4. Verfahren nach einem der vorhergehenden Ansprüche, wobei die Menge von Zustandsindikatoren (iⱼ₁, iⱼ₂) wenigstens einen Indikator umfasst, der charakteristisch für eine statische Einbau-Steifigkeit des Fundaments ist, also in Bezug auf einen Zusammenhang zwischen einer auf das Fundament ausgeübten statischen Beanspruchung und einer durch diese statische Beanspruchung bewirkten Verlagerung des Fundaments.

5. Verfahren nach einem der vorhergehenden Ansprüche, wobei der Vergleich zwischen einer Menge von Werten, welche von der Menge berechneter Zustandsindikatoren (iⱼ₁, iⱼ₂) abgeleitet sind, und einer Menge von Schwellenwerten wenigstens einen Einfluss-Faktor berücksichtigt, der dazu geeignet ist, wenigstens einen Zustandsindikator aus der Menge von Zustandsindikatoren zu beeinflussen, beispielsweise die Temperatur, den Wind, das Kriechen eines in dem Fundament oder dem Bauwerk enthaltenen Materials oder die Frequenz einer auf das Fundament ausgeübten Beanspruchung.

6. Verfahren nach einem der vorhergehenden Ansprüche, wobei wenigstens ein Parameter (P, f, t) des bestimmten Beschaffungsmodus, beispielsweise eine Zeitperiode, über welche die Menge von Messungen beschafft wird, ein Zeitintervall zwischen zwei aufeinanderfolgenden Zeitperioden, über welche die Menge von Messungen beschafft wird, oder eine Beschaffungsfrequenz innerhalb einer Zeitperiode, über welche die Menge von Messungen beschafft wird, gemäß dem Wert von wenigstens einem Zustandsindikator aus der Menge von Zustandsindikatoren (iⱼ₁, iⱼ₂) variiert.

7. Verfahren nach einem der vorhergehenden Ansprüche, wobei eine Begutachtung ausgeführt wird oder/und eine Entscheidung über eine Nutzung des Bauwerks (1) getroffen wird, abhängig von einem Resultat des Vergleichs.

8. Verfahren nach Anspruch 7, wobei die Entscheidung eine Schließung oder eine Einschränkung einer Nutzung des Bauwerks (1) umfasst.

9. Verfahren nach einem der vorhergehenden Ansprüche, wobei wenigstens einige der Schwellenwerte aus der Menge von Schwellenwerten ausgehend von einer theoretischen Modellierung (28) der Einbau-Steifigkeit des Fundaments ausgewählt werden und eventuell durch Messungen angepasst werden, welche in einer Lernphase (30) durchgeführt werden.

10. Verfahren nach einem der vorhergehenden Ansprüche, wobei das Fundament in einem Bereich liegt, der natürlichen Risiken ausgesetzt ist, beispielsweise Überschwemmungen, Erdbeben oder Erdrutschen.

11. Verfahren nach einem der vorhergehenden Ansprüche, wobei wenigstens ein Parameter (P, f, t) des bestimmten Beschaffungsmodus, beispielsweise eine Zeitperiode, über welche die Menge von Messungen beschafft wird, ein Zeitintervall zwischen zwei aufeinanderfolgenden Zeitperioden, über welche die Menge von Messungen beschafft wird, oder eine Beschaffungsfrequenz innerhalb einer Zeitperiode, über welche die Menge von Messungen beschafft wird, gemäß einem Wasserstand um das Fundament herum variiert.

12. Verfahren nach einem der vorhergehenden Ansprüche, wobei wenigstens einige Sensoren (4, 5) aus der Menge von Sensoren Fähigkeiten zur Daten-Verarbeitung und Daten-Speicherung haben.

13. Verfahren nach einem der vorhergehenden Ansprüche, wobei wenigstens einige Sensoren (4, 5) aus der Menge von Sensoren mit Batterie arbeiten und Mittel zur drahtlosen Kommunikation umfassen.

14. System zur Überwachung des Zustands eines Fundaments, welches ein Bauwerk (1) trägt und im Boden eingebaut ist, wobei das System dazu eingerichtet ist, das Verfahren nach einem der vorhergehenden Ansprüche durchzuführen, und wobei es umfasst:
• eine Menge von Sensoren (4, 5), die dazu geeignet sind, auf dem Bauwerk positioniert zu werden, wobei die Menge von Sensoren dazu eingerichtet ist, eine Menge von Messungen (mᵢ₁, mᵢ₂) zu beschaffen, welche sich auf das Fundament oder/und auf das Bauwerk beziehen, gemäß einem bestimmten Beschaffungsmodus,
• einen Rechner, um ausgehend von der Menge von Messungen eine Menge von Zustandsindikatoren (iⱼ₁, iⱼ₂) zu berechnen, welche charakteristisch ist für eine Einbau-Steifigkeit des Fundaments, und
• eine Vergleichseinrichtung, um einen Vergleich zwischen einer Menge von Werten, welche von der Menge berechneter Zustandsindikatoren abgeleitet sind, und einer Menge von Schwellenwerten auszuführen.

## Claims

1. A method for monitoring the state of a foundation supporting a structure (1) and embedded in the ground, comprising the following steps:
- acquiring, using a set of sensors (4,5) placed on the structure, a set of measurements (mᵢ₁,mᵢ₂) relating to the foundation and/or to the structure, according to a determined mode of acquisition;
- computing, from said set of measurements, a set of state indicators (iⱼ₁,iⱼ₂) characteristic of an embedding stiffness of the foundation; and
- performing a comparison between a set of values deduced from the set of computed state indicators and a set of thresholds.

2. The method as claimed in claim 1, wherein the set of state indicators (iⱼ₁,iⱼ₂) includes at least one indicator characteristic of a dynamic embedding stiffness of the foundation, that is to say relating to a ratio between a dynamic force applied to the foundation and a displacement of the foundation caused by said dynamic force.

3. The method as claimed in claim 2, wherein said indicator characteristic of a dynamic embedding stiffness of the foundation is characteristic of a vibratory behavior of the foundation and structure assembly, such as an indicator relating to specific vibration frequencies of the foundation and structure as a whole.

4. The method as claimed in any one of the preceding claims, wherein the set of state indicators (iⱼ₁,iⱼ₂) includes at least one indicator characteristic of a static embedding stiffness of the foundation, that is to say relating to a ratio between a static force applied to the foundation and a displacement of the foundation caused by said static force.

5. The method as claimed in any one of the preceding claims, wherein the comparison between a set of values deduced from the set of computed state indicators (iⱼ₁,iⱼ₂) and a set of thresholds takes into account at least one influencing factor that may affect at least one state indicator of the set of state indicators, such as temperature, wind, creep of a material incorporated in the foundation or the structure of the frequency of a force applied to the foundation.

6. The method as claimed in any one of the preceding claims, wherein at least one parameter (P,f,t) of said determined mode of acquisition, such as a time period over which the set of measurements is acquired, a time interval between two successive time periods over which the set of measurements is acquired, or a frequency of acquisition within a time period over which the set of measurements is acquired, varies according to the value of at least one state indicator of said set of state indicators (iⱼ₁,iⱼ₂).

7. The method as claimed in any one of the preceding claims, wherein an appraisal is made and/or a decision concerning operation of the structure (1) is taken, based on a result of said comparison.

8. The method as claimed in claim 7, wherein said decision includes closure or restriction of operation of the structure (1).

9. The method as claimed in any one of the preceding claims, wherein at least some of the thresholds of said set of thresholds are chosen on the basis of a theoretical modeling (28) of the embedding stiffness of the foundation, and possibly adjusted by measurements performed during a learning phase (30).

10. The method as claimed in any one of the preceding claims, wherein the foundation is located in an area subject to natural risks such as floods, earthquakes or landslips.

11. The method as claimed in any one of the preceding claims, wherein at least one parameter (P,f,t) of said determined mode of acquisition, such as a time period over which the set of measurements is acquired, a time interval between two successive time periods over which the set of measurements is acquired, or a frequency of acquisition within a time period over which the set of measurements is acquired, varies according to a water level around the foundation.

12. The method as claimed in any one of the preceding claims, wherein at least some sensors (4,5) of said set of sensors have data processing and storage capabilities.

13. The method as claimed in any one of the preceding claims, wherein at least some sensors (4,5) of said set of sensors are battery-operated and include wireless communication means.

14. A system for monitoring the state of a foundation supporting a structure (1) and embedded in the ground, the system being organized to implement the method as claimed in any one of the preceding claims and comprising:
- a set of sensors (4,5) which can be placed on the structure, said set of sensors being organized to acquire a set of measurements (mᵢ₁,mᵢ₂) relating to the foundation and/or to the structure, according to a determined mode of acquisition;
- a computer for computing, from said set of measurements, a set of state indicators (iⱼ₁,iⱼ₂) characteristic of an embedding stiffness of the foundation; and
- a comparator for performing a comparison between a set of values deduced from the set of computed state indicators and a set of thresholds.
